# EUROPÄISCHE PATENTSCHRIFT

(11) **EP 3 631 351 B1**
(45) Veröffentlichungstag und Bekanntmachung des Hinweises auf die Patenterteilung: **21.07.2021**
(21) Anmeldenummer: 18726425.4
(22) Anmeldetag: 17.05.2018
(51) Int. Cl.: G01B 5/255, G01B 11/275

(54) **UNTERSATZ ZUR FAHRZEUGVERMESSUNG MIT REFERENZSYSTEM**
BASE FOR MEASURING A VEHICLE WITH A REFERENCE SYSTEM
SUPPORT SERVANT À LA MESURE DE VÉHICULE ÉQUIPÉ D'UN SYSTÈME DE RÉFÉRENCE

(30) Priorität: 22.05.2017 DE 102017208614
(43) Veröffentlichungstag der Anmeldung: 08.04.2020
(73) Patentinhaber: Beissbarth GmbH, 80993 München (DE)
(72) Erfinder: SCHOMMER, Stefan, 85716 Unterschleissheim (DE); PETERS, Stefanie, 64289 Darmstadt (DE); WAGMANN, Christian, 80538 Muenchen (DE)
(74) Vertreter: Schmitt-Nilson Schraud Waibel Wohlfrom Patentanwälte Partnerschaft mbB
(86) Internationale Anmeldenummer: PCT/EP2018/062928
(87) Internationale Veröffentlichungsnummer: WO 2018/215291

(56) Entgegenhaltungen:
- DE-C- 511 335
- DE-U1- 9 012 625
- US-A- 5 287 626
- US-A- 6 047 594

## Beschreibung

Die Erfindung betrifft einen Untersatz zur Fahrzeugvermessung mit einem Referenzsystem, einen Messplatz zur Fahrzeugvermessung mit einem solchen Untersatz sowie die Verwendung von wenigstens zwei Referenzsystemen zur Bestimmung der relativen Position von wenigstens zwei Untersätzen eines Messplatzes zur Fahrzeugvermessung.

### Stand der Technik

Zur Achsvermessung und Fahrwerkseinstellung werden häufig Untersätze, z.B. in Form von Drehplatten und/oder Schiebeplatten, verwendet. Drehplatten werden in der Regel unter den lenkbaren Vorderrädern des Fahrzeugs angeordnet; Schiebeplatten werden in der Regel unter den Hinterrädern des Fahrzeugs angeordnet. Die Untersätze werden beispielsweise für die Entspannung des Fahrzeugs und/oder die Bestimmung des Lenkeinschlags oder des Nachlaufwertes verwendet. Der dafür benötigte Platz und insbesondere die Möglichkeit, die Drehplatten für die Vorderachse variabel zu platzieren, ist bei Arbeitsplätzen für die Achsvermessung, wie z.B. 4-Säulen-Hebebühnen, häufig bereits vorgesehen.

Eine Kernkomponente der Achsvermessung mit optischen Achsmesssystemen ist die Referenzierung, d.h. die Herstellung eines Bezugs zwischen den einzelnen rad- oder achsbezogenen Messwerten, um die auf das Fahrzeug bezogenen Kenngrößen, wie beispielsweise die Gesamtspur einer Achse oder die Einzelspur eines Rades, ermitteln zu können. Insbesondere die Ermittlung der Querverbindung mit sechs Freiheitsgraden (3 Winkel und 3 Abständen) von der linken zu der rechten Seite des Fahrzeugs stellt eine besondere Herausforderung dar. Bestehende Systeme verwenden hierfür in der Regel mechanische Verbindungen zwischen der Sensorik oder beobachtete Targets, und/oder optische, insbesondere kamerabasierte, Systeme, die eine Sichtverbindung zwischen der linken und der rechten Seite des Fahrzeugs benötigen. Je nachdem welches Messprinzip verwendet wird, erfordert die Querreferenzierung eine bekannte oder kalibrierte Mechanik. Aufgrund der hohen Genauigkeitsanforderungen bei der Achsvermessung muss die Mechanik insbesondere gegenüber thermischen und mechanischen Veränderungen sehr stabil gestaltet sein. Sie ist daher aufwendig und sperrig.

US 6047594 A beschreibt eine digitale Drehplattenvorrichtung zum Ausrichten von Lenksystemen von Radfahrzeugen. Die Drehplattenvorrichtung hat einen Drehbewegungs-Freiheitsgrad zum Bestimmen des Radausrichtungswinkels. Die Drehplattenvorrichtung weist auch seitliche und longitudinale Freiheitsgrade auf, um die laterale und longitudinale Bewegung des Reifenbodens aufzunehmen, die während des Abbiegens oder beim Zusammendrücken der Aufhängung auftreten kann. Die Drehplattenvorrichtung umfasst im Allgemeinen eine Basis, eine obere Platte, eine Griffplatte, eine untere mittlere Platte, ein Potentiometer und einen digitalen Anzeigemechanismus. Die obere Platte ist drehbar an der Griffplatte montiert und steht funktionell mit dem Potentiometer in Eingriff. Die Drehplattenvorrichtung zeigt die Drehposition der oberen Platte digital bis auf ein Zehntel Grad an. Die Griffplatte ist so konstruiert, dass sie in gegenüber der Basis einen Längsbewegungsfreiheitsgrad aufweist, und die untere Mittelplatte ist so konstruiert, dass sie gegenüber der Basis einen seitlichen Freiheitsgrad aufweist.

DE 90 12 625 U offenbart einen Drehuntersatz für elektronische Achsmeßgeräte zur Aufnahme von auf eine Messbasis auszurichtende lenkbare Fahrzeugräder mit einer Grundplatte, auf der eine Drehplatte drehbar gelagert und mit einer Trägerschiene in einer Lagereinrichtung in einem Koordinatensystem bewegbar geführt ist. Der Antrieb des Drehwinkelgebers ist als geschlossenes Getriebe ausgebildet und die Betriebsstellung ist durch die Verbindung eines Lagerzapfens der Drehplatte mit der Drehachse festgelegt.

DE 511 335 C offenbart ein Gerät zum Anzeigen von Fehlern in der Anordnung von Fahrzeuggeräten mit zwei im Abstand voneinander angeordnete; verschiebbar gelagerte Platten, die durch Lenker mit den gegenüberliegenden Enden einer in ihrer Mitte drehbar auf einer die Platten tragenden Grundplatte gelagerten Stange verbunden sind. An der Stange ist ein über einer Skala spielender Zeiger befestigt.

US 5 287 626 A beschreibt eine Vorrichtung zum Messen des Drehwinkels eines Objekts, die eine schwimmende Drehstütze für das Objekt umfasst. Die Drehstütze ist auf einem Rahmen montiert, um eine freie seitliche Bewegung in X- und Y-Koordinatenrichtung zu ermöglichen. Es werden ein Zweipunktcursor und ein Digitaltablett bereitgestellt, um X- und Y-Koordinaten für das Objekt in einer zweiten, relativ gedrehten Position zu identifizieren. Insbesondere ist entweder der Cursor oder das Digitaltablett an der Drehhalterung angebracht, während das andere von diesen beiden Elementen auf dem Rahmen fastgehalten wird. Zusätzlich ist ein Prozessor zum Berechnen des Drehwinkels des Objekts auf Basis der für die gedrehte Position bestimmten X- und Y-Koordinaten vorgesehen.

Es ist eine Aufgabe der Erfindung, die Referenzierung zwischen den beiden Seiten eines Fahrzeugs zu verbessern, insbesondere zu vereinfachen.

### Offenbarung der Erfindung

Ein Ausführungsbeispiel der Erfindung umfasst einen Untersatz zur Fahrzeugvermessung mit einem Referenzsystem gemäß Anspruch 1. Darüber hinaus kann das Referenzsystem auch zur Bestimmung der räumlichen Position, d.h. Translation des Untersatzes in Bezug auf wenigstens einen weiteren Untersatz, ausgebildet sein.

Die Bestimmung der Ausrichtung (Rotation) um wenigstens eine Koordinatenachse der Referenzsysteme zueinander, insbesondere der Winkel in Bezug auf die Spur eines zu vermessenden Fahrzeugs, ist zwingend notwendig. Die Bestimmung der räumlichen Position(en) (Translation) ist hilfreich, aber optional.

Ausführungsbeispiele der Erfindung umfassen auch einen Messplatz zur Fahrzeugvermessung mit wenigstens zwei Untersätzen, die jeweils gemäß einem Ausführungsbeispiel der Erfindung ausgebildet sind.

Ein erfindungsgemäßes Verfahren zur Fahrwerksvermessung ist definiert durch Anspruch 12.

Ein erfindungsgemäßes Verfahren zum Verbessern eines Messplatzes zur Fahrzeugvermessung ist definiert durch Anspruch 14.

Ausführungsbeispiele der Erfindung umfassen auch die Verwendung von wenigstens zwei Referenzsystemen gemäß Anspruch 15. Referenzsysteme zur Querreferenzierung mit Untersätzen eines Messplatzes zur Fahrzeugvermessung zu kombinieren bzw. in die Untersätze zu integrieren, hat eine Reihe von Vorteilen zur Folge: Insbesondere können der "FootPrint", d.h. der Gesamtflächenbedarf der Untersätze in der Draufsicht, und die Größe der Messwertaufnehmer, die an den Räder des zu vermessenden Fahrzeugs montiert werden, reduziert werden. Ein reduzierter Platzbedarf ist in vielen Werkstätten von Vorteil.

Bei Verwendung eines Untersatzes, der gemäß einem Ausführungsbeispiel der Erfindung mit wenigstens einem Referenzsystem ausgestattet ist, muss für ein zu vermessendes Rad von einem lokalen Messsystem zusätzlich nur die Beziehung zwischen dem Rad und dem Untersatz bestimmt werden.

In einer Ausführungsform weist der Untersatz wenigstens ein Messtarget auf, das einen festen räumlichen Bezug zum Untersatz hat. Dabei kann es sich um ein optisch aktives Messtarget, insbesondere um eine Lichtquelle, wie z.B. eine LED oder das Ende eines Lichtleiters, oder um ein optisch passives, insbesondere um ein reflektierendes Messtarget, oder um eine Kombination aus optisch aktiven und passiven Messtargets handeln. Ein an dem Untersatz angebrachtes Messtarget vereinfacht die Bestimmung der räumlichen Beziehung zwischen dem Rad und dem Untersatz, insbesondere wenn optische Messsysteme verwendet werden.

In einer Ausführungsform weist der Messplatz wenigstens ein optisches Messsystem auf, das ausgebildet ist, die Position eines Rades, das auf dem Untersatz angeordnet ist, in Bezug auf den Untersatz, insbesondere in Bezug auf die Lage des Referenzsystems, zu bestimmen. In dieser Ausführungsform sieht das optische Messsystem das Rad.

In einer weiteren Ausführungsform ist das optische Bildaufnahmesystem am Rad befestigt und ausgebildet, Bilder des Messtargets an dem Untersatz aufzunehmen, um die Beziehung zwischen dem Rad und dem Referenzsystem zu bestimmen. In dieser Ausführungsform muss das optische Bildaufnahmesystem das Rad nicht sehen. Die räumliche Beziehung zwischen dem Rad und dem optischen Bildaufnahmesystem ist aufgrund der Montage des Messwertaufnehmers an dem Rad bekannt. Es ist daher ausreichend, den räumlichen Bezug zwischen dem optischen Bildaufnahmesystem und dem Referenzsystem zu bestimmen.

Mittels eines optischen Bildaufnahmesystem kann die räumliche Beziehung zwischen dem Rad und dem Untersatz einfach, bequem und mit hoher Genauigkeit bestimmt werden.

Um den Platzbedarf zu reduzieren, kann das optische Bildaufnahmesystem insbesondere in oder an dem Untersatz ausgebildet sein. Darüber hinaus ist ein geringer räumlicher Abstand zwischen dem optischen Bildaufnahmesystem und dem Rad vorteilhaft, um Fehler und/oder Ungenauigkeiten bei der Messung zu reduzieren.

In einer Ausführungsform umfasst das wenigstens eine optische Bildaufnahmesystem wenigstens einen Messwertaufnehmer, der direkt an dem zu vermessenden Rad, bzw. an dessen Felge, anbringbar ist. Ein derartiger Messwertaufnehmer ermöglicht es, die Genauigkeit der Referenzierung noch weiter zu verbessern.

In einer Ausführungsform wird mit dem optischen Messsystem nur die lokale Ausrichtung in Spurrichtung des Rades in Bezug auf den Untersatz bestimmt. Auf Grundlage des bekannten Bezugs des Referenzsystems zu dem Untersatz und der bekannten Orientierungen des Untersatzes kann die Spur der Räder im Sinne der Achsvermessung bestimmt werden.

In einer Ausführungsform sind die Referenzsysteme ausgebildet, wenigstens zwei (parallele) Referenzstrecken zwischen wenigstens zwei Untersätzen bereit zu stellen. Dadurch werden die Kalibrierung und die Messung nicht negativ beeinflusst, wenn eine der Referenzstrecken, z.B. durch einen Mechaniker bei der Durchführung von Einstellarbeiten, unterbrochen bzw. blockiert wird.

### Kurze Beschreibung der Figuren

Ein Ausführungsbeispiel der Erfindung wird im Folgenden unter Bezugnahme auf die beigefügten Figuren am Beispiel von Drehplatten erläutert. Der Fachmann erkennt, dass die Prinzipien der Erfindung analog auch auf andere Arten von Untersätzen, wie z.B. Schiebeplatten und kombinierte Dreh- und Schiebeplatten, angewandt werden können.

Dabei zeigt:
Figur 1 eine schematische perspektivische Ansicht eines Messplatzes zur Fahrzeugvermessung;
Figur 2 eine schematische perspektivische Darstellung eines Ausschnitts eines Achsmesssystems mit zwei Drehplatten mit integrierten Referenzsystemen und einer zwischen den Referenzsystemen verlaufenden Referenzstrecke;
Figur 3 eine schematische perspektivische Darstellung eines Ausschnitts eines Achsmesssystems mit zwei Drehplatten mit integrierten Referenzsystemen mit zwei zwischen den Referenzsystemen verlaufenden Referenzstrecken;
Figur 4 eine schematische perspektivische Darstellung der lokalen Ausrichtung zwischen einem auf der Drehplatte angeordneten Rad und einem an der Drehplatte angebrachten Target; und
Figur 5 eine schematische perspektivische Darstellung eines auf einer Drehplatte angeordneten Rades mit einem am Rad angebrachten Messwertaufnehmer.

### Figurenbeschreibung

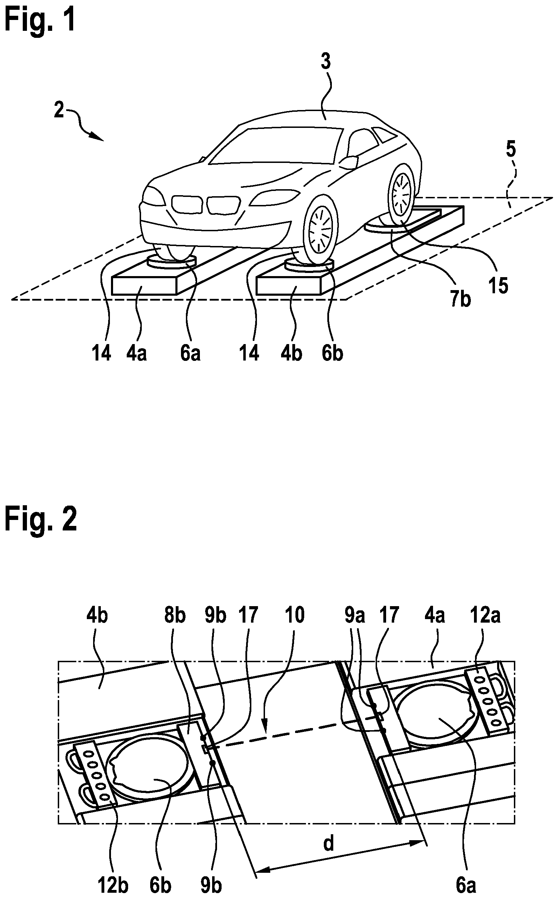

Figur 1 zeigt eine schematische perspektivische Ansicht eines Messplatzes 2 zur Fahrzeugvermessung gemäß einem Ausführungsbeispiel der Erfindung.

Der Messplatz 2 weist zwei Drehplatten 6a, 6b und zwei Schiebeplatten 7b auf.

Die Drehplatten 6a, 6b sind zur Aufnahme der lenkbaren Vorderräder 14 eines Fahrzeugs 3 vorgesehen, und die Schiebeplatten 7b sind zur Aufnahme der Hinterräder 15 des Fahrzeugs 3 bestimmt. Das rechte Hinterrad des Fahrzeugs 3 und die darunter angeordnete Schiebeplatte sind in der perspektivischen Darstellung der Figur 1 nicht sichtbar, da sie von der Karosserie des Fahrzeugs 3 verdeckt werden. Die nicht sichtbare rechte Schiebeplatte ist anlog zur auf der linken Seite des Fahrzeugs 3 (der rechten Seite der Figur 1) sichtbaren Schiebeplatte 7b aufgebaut.

Die Schiebeplatten 7b sind flächig auf Fahrschienen 4a, 4b montiert und reichen bis zum hinteren Ende der Fahrschienen 4a, 4a. Zum Entspannen und/oder Einstellen des Fahrzeugs 3 können die Schiebeplatten 7b gelöst werden.

Um den Messplatz 2 an unterschiedliche Spurweiten (Breiten des Fahrzeugs 3) anpassen zu können, kann entweder wenigstens eine der Drehplatten 6a, 6b quer zur Fahrtrichtung verschoben werden, oder der Abstand zwischen den beiden Fahrschienen 4a, 4a kann verändert werden. Es ist auch möglich, dass der Messplatz 2 in seinem hinteren Bereich keine Schiebeplatten 7b, sondern zwei weitere Drehplatten 6a, 6b aufweist, die zur Aufnahme der Hinterräder 15 vorgesehen sind.

Anders als in der Figur 1 gezeigt, können die Schienen 4a, 4b bündig mit dem Boden 5 des Messplatzes 2 ausgebildet sein. Alternativ können die Enden der Schienen 4a, 4b abgeschrägt sein, so dass das Fahrzeug 2 stufenlos auf die Schienen 4a, 4b auf- und von diesen herunter fahren kann.

Figur 2 zeigt eine schematische perspektivische Ansicht von zwei Drehplatten 6a, 6b gemäß einem Ausführungsbeispiel der Erfindung. Jede der beiden Drehplatten 6a, 6b ist mit einem Referenzsystem 8a, 8b versehen. Die Referenzsysteme 8a, 8b sind insbesondere auf der Seite der Drehplatte 6a, 6b angeordnet, die der jeweils anderen Drehplatte 6b, 6a zugewandt ist.

Die Referenzsysteme 8a, 8b sind dazu ausgebildet, die räumliche Beziehung zwischen den beiden Drehplatten 6a, 6b, d.h. die Anordnung der beiden Drehplatten 6a, 6b zueinander, zu bestimmen.

Die Referenzsysteme 8a, 8b sind insbesondere so ausgebildet, dass sie zumindest in der Lage sind, den relativen Winkel, d.h. die Ausrichtung der Referenzstrecke 10 zwischen den beiden Drehplatten 6a, 6b, in der gemeinsamen Ebene des Messplatzes 2 (der Ebene der Schienen 4a, 4b) zu bestimmen.

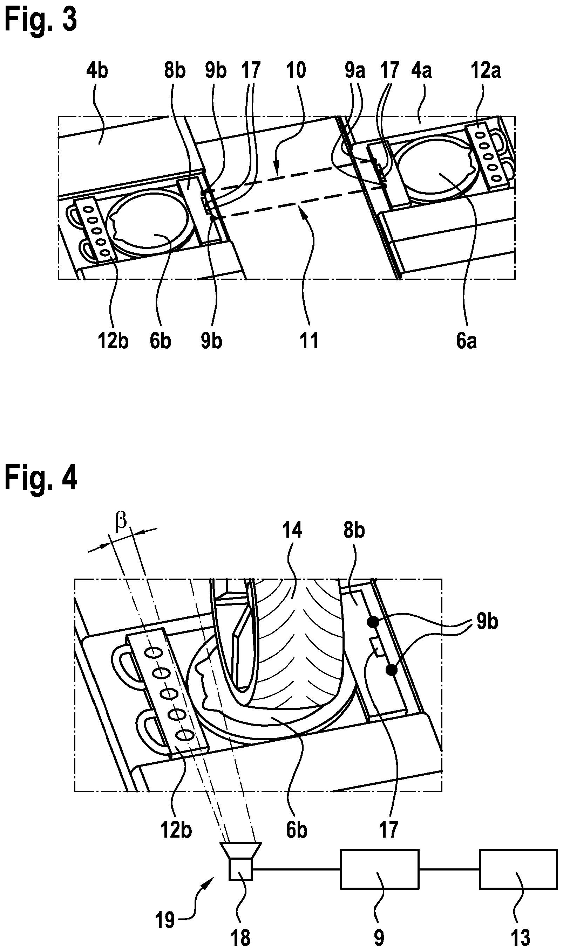

Die Referenzsysteme 8a, 8b können in einer Minimalform ausgebildet sein, in der sie nur den relativen Winkel zwischen den beiden Drehplatten 6a, 6b bestimmen. In diesem Fall muss der Abstand d zwischen den beiden Referenzsystemen (8a, 8b) bzw. Drehplatten 6a, 6b, der für eine vollständige Referenzierung erforderlich ist, manuell gemessen und über eine Eingabevorrichtung 13 in eine Berechnungseinheit 9 (siehe Figur 4) eingegeben werden.

In einer erweiterten Variante können die Referenzsysteme 8a, 8b so ausgebildet sein, dass sie neben dem relativen Winkel auch den Abstand d zwischen den beiden Referenzsystemen 8a, 8b und somit den Abstand zwischen den beiden Drehplatten 6a, 6b mit der notwendigen Genauigkeit bestimmen können. In diesem Fall kann auf eine manuelle Messung eine Eingabe des Abstandes d verzichtet werden, wodurch die Bedienung vereinfacht und eine mögliche Fehlerquelle ausgeschlossen wird.

Die Referenzierung erfolgt optisch, insbesondere mit Hilfe von (in den Figuren nicht gezeigten) Kameras und an den Referenzsystemen 8a, 8b angebrachten Referenztargets 9a, 9b, wie dies von herkömmlichen Referenzsystemen bekannt ist.

Die Referenztargets 9a, 9b sind vorzugsweise auf der dem jeweils anderen Referenzsystem 8a, 8b zugewandten Seite jedes Referenzsystems 8a, 8b ausgebildet, so dass sie von einer Kamera des anderen Referenzsystems 8a, 8b optisch erfasst werden können.

Die Referenztargets 9a, 9b können "aktive Targets", d.h. aktive Lichtquellen, wie z.B. LEDs oder Enden von Lichtleitern, oder "passive Targets", z.B. Reflektoren, sein, die selbst kein Licht aussenden bzw. erzeugen, sondern Licht, das auf die Referenztargets 9a, 9b gestrahlt wird, reflektieren. Die Referenztargets 9a, 9b können auch eine Kombination aus aktiven und passiven Targets umfassen.

Zusätzlich zu den Referenztargets 9a, 9b, die, wie beschrieben, zur gegenseitigen Referenzierung der Referenzsysteme 8a, 8b vorgesehen sind, sind an jeder der Drehplatten 6a, 6b Messtargets 12a, 12b ausgebildet, die es ermöglichen, ein Rad 14 des Fahrzeugs 2, das auf einer der Drehplatten 6a, 6b angeordnet ist, in Bezug auf die jeweilige Drehplatte 6a, 6b zu referenzieren. Dies wird im Folgenden unter Bezugnahme auf die Figur 4 beschrieben.

Figur 3 zeigt ein Ausführungsbeispiel, in dem die an den Drehplatten 6a, 6b angebrachten Referenzsysteme 8a, 8b ausgebildet sind, zwei parallel zueinander verlaufende Referenzstrecken 10, 11 einzurichten und zur Referenzierung zu verwenden.

Das Ausbilden und Verwenden von wenigstens zwei parallel verlaufenden Referenzstrecken 10, 11 verhindert, dass die Referenzierung zusammenbricht, wenn eine der beiden Referenzstrecken 10, 11, z.B. von einem Mechaniker bei der Durchführung von Einstellarbeiten, unterbrochen wird. Die Zuverlässigkeit der Fahrzeugvermessung und insbesondere der Kalibrierung wird auf diese Weise weiter erhöht.

Darüber hinaus kann durch die Verwendung von zwei parallelen Referenzstrecken 10, 11 die Qualität der Referenzierung verbessert werden.

Figur 4 zeigt eine schematische perspektivische Ansicht einer Drehplatte 6b gemäß einem Ausführungsbeispiel der Erfindung mit einem auf der Drehplatte 6b angeordneten Rad 14.

Der Winkel β zwischen der Lauf-/Abrollrichtung des Rades 14 und der Längsachse des Messplatzes 2, die durch das an der Drehplatte 6b angeordnete Messtarget 12b vorgegeben ist, kann durch eine in die Drehplatte 6b integrierte Messvorrichtung zur Drehwinkelbestimmung erfolgen.

Alternativ kann auch ein optisches Messsystem 19 verwendet werden, das ausgebildet ist, sowohl das Messtarget 12b als auch das Rad 14, bzw. am Rad 14 angebrachte passive oder aktive Targets, die in den Figuren nicht gezeigt sind, optisch zu erfassen, um den Winkel β des Rades 14 in Bezug auf das Messtarget 12b zu bestimmen.

Das optische Messsystem 19 kann insbesondere eine Kamera (optisches Bildaufnahmesystem) 18 umfassen, die an der Drehplatte 6b oder an einer anderen Stelle des Messplatzes 2, z.B. an der Decke über dem Messplatz 2 oder einer Wand neben dem Messplatz 2 montiert sein kann.

Wenn das optische Messsystem 19 bzw. die Kamera 18 des optischen Messsystems 19 in die Drehplatte 6a, 6b integriert ist, ist kein Messtarget 12b notwendig. Das optische Messsystem 19 ersetzt in diesem Fall das Messtarget 12b, da der räumliche Bezug zwischen Drehplatte 6a, 6b und dem optischen Messsystem 19 bzw. dessen Kamera 18, z.B. aufgrund der Einbauposition, bekannt ist.

Die von dem optischen Messsystem 19 ermittelten Daten werden zur weiteren Auswertung drahtlos oder drahtgebunden an eine Berechnungseinheit 9 übertragen. Die Berechnungseinheit 9 kann innerhalb eines Messwertaufnehmers, in der Dreh- oder Schiebeplatte 6a, 6b oder in einem externen Gerät, wie z.B. einem PC, einem Laptop, einem Tablet-Computer, einem Smartphone, o.ä. ausgebildet sein. Die Berechnungseinheit 9 kann eine Eingabevorrichtung 13 aufweisen, welche die Eingabe weiterer Daten, beispielsweise des Abstandes d zwischen den beiden Referenzsystemen 8a, 8b ermöglicht.

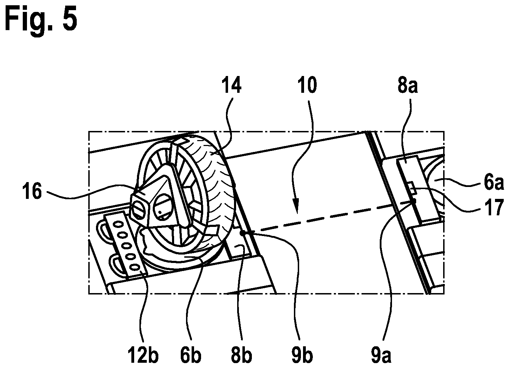

Figur 5 zeigt ein Ausführungsbeispiel, bei dem eine Sensorik zum Bestimmen des Spurwinkels β in Form eines Messwertaufnehmers 16 an einer Felge 15 des Rades 14 montiert ist. Der Messwertaufnehmer 16 weist wenigstens eine Kamera, insbesondere eine Stereo-Kamera auf, die so ausgebildet ist, dass sie Bilder des an der Drehplatte 6b angeordneten Messtargets 12b aufnimmt. Die auf diese Weise aufgenommenen Bilder ermöglichen es, die Orientierung des Rades 14 in Bezug auf die Drehplatte 6b, und insbesondere den Spurwinkel β des Rades 14, zu bestimmen.

Ein Messplatz 2 mit Drehplatten 6a, 6b, die gemäß Ausführungsbeispielen der Erfindung mit jeweils einem Referenzsystemen 8a, 8b ausgestattet sind, weist insbesondere folgende Vorteile auf:
- Es besteht kein zusätzlicher Platzbedarf für das Referenzsystem 8a, 8b in den Messwertaufnehmern 16. Dies ermöglicht einen kleinen "FootPrint" der Messwertaufnehmer 16.
- Aufgrund der kamerabasierten Messsensorik am Rad 14 sind keine baulichen Veränderungen in der Werkstatt, wie z.B. Bohren, Adaptionen an Achsmessbühne, usw., erforderlich. Es entstehen keine zusätzlichen Kosten und die Statik der Werkstatt bzw. Achsmessbühne wird nicht verändert, so dass keine Freigabe z.B. durch den Hersteller einer Achsmessbühne erforderlich ist.
- Die Stromversorgung kann über einen Akku oder über die häufig bereits vorhandene Stromversorgung der Achsmessbühne erfolgen.
- Messplätze 2, die gemäß einem Ausführungsbeispiel der Erfindung ausgebildet sind, sind für alle Fahrzeuge 3, für die der Achsmessarbeitsplatz ausgelegt ist, geeignet.
- Drehplatten 6a, 6b gemäß Ausführungsbeispielen der Erfindung sind mobil, d.h. nicht fest an einen Messplatz 2 gebunden. Sie können vielmehr transportiert und auch an anderen Messplätzen 2 eingesetzt werden.
- Aufgrund des geringen Abstandes zwischen dem Rad 14 und der Drehplatte 6a, 6b ist die Baugröße der optischen Systeme gering. Da das Rad 14 bei der Messung immer auf einer der Drehplatten 6a, 6b steht, gibt es keine großen Variationen, insbesondere keine Variationen, die von den Abmessungen des Fahrzeugs 3 abhängig sind.

Vorhandene Dreh- und/oder Schiebeplatten 6a, 6b, 8a, 8b können durch Anbringen montierebarer Referenzsysteme 8a, 8b und Messtargets 12a, 12b zu Dreh- und/oder Schiebeplatten 6a, 6 gemäß einem Ausführungsbeispiel der Erfindung nachgerüstet werden.

## Patentansprüche

1. Untersatz (6a, 6b) zur Fahrzeugvermessung, der zur Aufnahme eines Fahrzeugrades (14) ausgebildet und mit wenigstens einem Referenzsystem (8a, 8b) ausgestattet ist, wobei das Referenzsystem (8a, 8b) wenigstens eine Kamera und wenigstens ein an dem Referenzsystem (8a, 8b) angebrachtes Referenztarget (9a, 9b) umfasst, wobei die wenigstens eine Kamera und das wenigstens eine Referenztarget (9a, 9b) zur Bestimmung der Ausrichtung des Untersatzes (6a, 6b) um wenigstens eine Koordinatenachse in Bezug auf wenigstens einen weiteren Untersatz (6a, 6b) mit den Merkmalen von Patentanspruch 1 ausgebildet sind.

2. Untersatz (6a, 6b) nach Anspruch 1, wobei das mindestens eine Referenzsystem (8a, 8b) zusätzlich zur Bestimmung der räumlichen Position des Untersatzes (6a, 6b) in Bezug auf den wenigstens einen weiteren Untersatz (6a, 6b) ausgebildet ist.

3. Untersatz (6a, 6b) nach Anspruch 1 oder 2, wobei dieser Untersatz (6a, 6b) wenigstens ein Messtarget (12a, 12b) aufweist, das einen festen Bezug zu dem Untersatz (6a, 6b) hat.

4. Untersatz (6a, 6b) nach Anspruch 3, wobei der Untersatz (6a, 6b) wenigstens ein optisches Messsystem (19) aufweist, das ausgebildet ist, die Orientierung eines Rades (14), das auf dem Untersatz (6a, 6b) angeordnet ist, in Bezug auf den Untersatz (6a, 6b) zu bestimmen, wobei das optische Messsystem (19) insbesondere wenigstens eine Kamera (18) umfasst, deren Bezug zu dem Untersatz (6a, 6b) bekannt ist.

5. Untersatz (6a, 6b) nach Anspruch 3 oder 4, wobei der Untersatz (6a, 6b) wenigstens ein optisches Messsystem (19) aufweist, das ausgebildet ist, die Position eines Rades (14), das auf dem Untersatz (6a, 6b) angeordnet ist, in Bezug auf den Untersatz (6a, 6b) zu bestimmen, wobei das optische Messsystem (19) insbesondere wenigstens eine Kamera (18) umfasst, deren Bezug zu dem Untersatz (6a, 6b) bekannt ist.

6. Messplatz (2) zur Fahrzeugvermessung mit wenigstens zwei Untersätzen (6a, 6b) nach einem der Ansprüche 1 bis 5.

7. Messplatz (2) zur Fahrzeugvermessung nach Anspruch 6, wobei die Referenzsysteme (8a, 8b) zusätzlich ausgebildet sind, die Position der Untersätze (6a, 6b) in Bezug zueinander zu bestimmen.

8. Messplatz (2) zur Fahrzeugvermessung nach Anspruch 6 oder 7, wobei der Messplatz (2) wenigstens ein optisches Messsystem (19) aufweist, das ausgebildet ist, die Orientierung eines Rades (14), das auf dem Untersatz (6a, 6b) angeordnet ist, in Bezug auf den Untersatz (6a, 6b) zu bestimmen, wobei das optische Messsystem (19) insbesondere wenigstens eine Kamera (18) umfasst.

9. Messplatz (2) zur Fahrzeugvermessung nach Anspruch 8, wobei der Messplatz (2) wenigstens ein optisches Messsystem (19) aufweist, das ausgebildet ist, die Position eines Rades (14), das auf dem Untersatz (6a, 6b) angeordnet ist, in Bezug auf den Untersatz (6a, 6b) zu bestimmen, wobei das optische Messsystem (19) insbesondere wenigstens eine Kamera (18) umfasst.

10. Messplatz (2) zur Fahrzeugvermessung nach Anspruch 8 oder 9, wobei das wenigstens eine optische Messsystem (19) wenigstens einen an einem Rad (14) anbringbaren Messwertaufnehmer (16) umfasst.

11. Messplatz (2) zur Fahrzeugvermessung nach einem der Ansprüche 6 bis 10, wobei die Referenzsysteme (8a, 8b) der beiden Untersätze (6a, 6b) ausgebildet sind, wenigstens zwei Referenzstrecken (10, 11) zwischen den wenigstens zwei Untersätzen (6a, 6b) bereitzustellen.

12. Verfahren zur Fahrwerksvermessung auf einem Messplatz (2) nach einem der Ansprüche 6 bis 11, wobei das Verfahren umfasst:
die Orientierung der wenigstens zwei Untersätze (6a, 6b) in Bezug zueinander zu bestimmen; und
die Orientierung jeweils eines auf jedem der Untersätze (6a, 6b) angeordneten Rades (14) in Bezug auf den jeweiligen Untersatz (6a, 6b) zu bestimmen.

13. Verfahren zur Fahrwerksvermessung nach Anspruch 12, wobei das Verfahren zusätzlich umfasst:
die Positionen der wenigstens zwei Untersätze (6a, 6b) in Bezug zueinander zu bestimmen; und
die Positionen jeweils eines auf jedem der Untersätze (6a, 6b) angeordneten Rades (14) in Bezug auf den jeweiligen Untersatz (6a, 6b) zu bestimmen.

14. Verfahren zum Verbessern eines Messplatzes (2) zur Fahrzeugvermessung mit wenigstens zwei Untersätzen (6a, 6b), die jeweils zur Aufnahme eines Fahrzeugrades (14) ausgebildet sind, wobei das Verfahren umfasst, an wenigstens zwei der Untersätze (6a, 6b) jeweils wenigstens ein Referenzsystem (8a, 8b) zu montieren, wobei die Referenzsysteme (8a, 8b) Kameras und an den Referenzsystemen (8a, 8b) angebrachte Referenztargets (9a, 9b) umfassen und ausgebildet sind, die Orientierungen der Untersätze (6a, 6b) in Bezug zueinander zu bestimmen, wobei die Referenzsysteme (8a, 8b) insbesondere ausgebildet sind, auch die Positionen der Untersätze (6a, 6b) in Bezug zueinander zu bestimmen.

15. Verwendung von wenigstens zwei Referenzsystemen (8a, 8b), die Kameras und an den Referenzsystemen (8a, 8b) angebrachte Referenztargets (9a, 9b) umfassen zur Bestimmung der relativen Orientierung von wenigstens zwei Untersätzen (6a, 6b) eines Messplatzes (2) zur Fahrzeugvermessung, die jeweils zur Aufnahme eines Fahrzeugrades (14) ausgebildet sind, wobei die Untersätze jeweils mit einem Referenzsystem ausgestattet sind.

## Claims

1. A base (6a, 6b) for vehicle wheel alignment measurement, which is designed to accommodate a vehicle wheel (14) and is equipped with at least one reference system (8a, 8b), the reference system (8a, 8b) comprising at least one camera and at least one reference target (9a, 9b) attached to the reference system (8a, 8b), said at least one camera and said at least one reference target (9a, 9b) being designed to determine the orientation of the base (6a, 6b) around at least one coordinate axis in relation to at least one further base (6a, 6b) comprising the features of claim 1.

2. The base (6a, 6b) according to claim 1,
wherein the at least one reference system (8a, 8b) is designed to determined in addition the spatial position of the base (6a, 6b) in relation to said at least one further base (6a, 6b).

3. The base (6a, 6b) according to claim 1 or 2,
wherein said base (6a, 6b) comprises at least one measurement target (12a, 12b) having a fixed relation to said base (6a, 6b).

4. The base (6a, 6b) according to claim 3,
wherein said base (6a, 6b) comprises at least one optical measurement system (19) designed to determine the orientation of a wheel (14) arranged on the base (6a, 6b) in relation to said base (6a, 6b), the optical measurement system (19) comprising in particular at least one camera (18) having a known relation to said base (6a, 6b).

5. The base (6a, 6b) according to claim 3 or 4,
wherein said base (6a, 6b) comprises at least one optical measurement system (19) designed to determine the position of a wheel (14) arranged on the base (6a, 6b) in relation to said base (6a, 6b), the optical measurement system (19) comprising in particular at least one camera (18) having a known relation to said base (6a, 6b).

6. A measuring site (2) for vehicle wheel alignment measurement, comprising at least two bases (6a, 6b) according to any of claims 1 to 5.

7. The measuring site (2) for vehicle wheel alignment measurement according to claim 6,
wherein the reference systems (8a, 8b) are designed in addition to determine the position of the bases (6a, 6b) in relation to one another.

8. The measuring site (2) for vehicle wheel alignment measurement according to claim 6 or 7,
wherein the measuring site (2) comprises at least one optical measurement system (19) which is designed to determine the orientation of a wheel (14) arranged on the base (6a, 6b) in relation to said base (6a, 6b), the optical measurement system (19) comprising in particular at least one camera (18).

9. The measuring site (2) for vehicle wheel alignment measurement according to claim 8,
wherein the measuring site (2) comprises at least one optical measurement system (19) which is designed to determine the position of a wheel (14) arranged on the base (6a, 6b) in relation to said base (6a, 6b), the optical measurement system (19) comprising in particular at least one camera (18).

10. The measuring site (2) for vehicle wheel alignment measurement according to claim 8 or 9,
wherein the at least one optical measurement system (19) comprises at least one sensor (16) attachable to a wheel (14).

11. The measuring site (2) for vehicle wheel alignment measurement according to any of claims 6 to 10,
wherein the reference systems (8a, 8b) of said two bases (6a, 6b) are designed to provide at least two reference routes (10, 11) between said at least two bases (6a, 6b).

12. A method of vehicle wheel alignment measurement at a measuring site (2) according to any of claims 6 to 11, the method comprising the steps of:
determining the orientation of the at least two bases (6a, 6b) in relation to one another; and
determining the orientation of a respective wheel (14) arranged on each of the bases (6a, 6b) in relation to the respective base (6a, 6b).

13. The method of vehicle wheel alignment measurement according to claim 12, wherein said method further comprises the steps of:
determining the positions of the at least two bases (6a, 6b) in relation to one another; and
determining the positions of a respective wheel (14) arranged on each of said bases (6a, 6b) in relation to the respective base (6a, 6b).

14. A method of improving a measuring site (2) for vehicle wheel alignment measurement comprising at least two bases (6a, 6b), each designed to accommodate a vehicle wheel (14), said method comprising mounting at least one reference system (8a, 8b) each on at least two of the bases (6a, 6b), the reference systems (8a, 8b) comprising cameras and reference targets (9a, 9b) attached to the reference systems (8a, 8b), and being designed to determine the orientations of the bases (6a, 6b) in relation to one another, with the reference systems (8a, 8b) being designed in particular to determine also the positions of the bases (6a, 6b) in relation to one another.

15. The use of at least two reference systems (8a, 8b), comprising cameras and reference targets (9a, 9b) attached to the reference systems (8a, 8b), for determining the relative orientation of at least two bases (6a, 6b) of a measuring site (2) for vehicle wheel alignment measurement, which are each designed to accommodate a vehicle wheel (14), each of said bases being equipped with a reference system.

## Revendications

1. Support (6a, 6b) servant à la mesure de véhicule, réalisé de manière à accueillir une roue de véhicule (14) et équipé d'au moins un système de référence (8a, 8b), **caractérisé en ce que** le système de référence (8a, 8b) comprend au moins une caméra et au moins une cible de référence (9a, 9b) fixée au système de référence (8a, 8b), la caméra, une au moins, et la cible de référence (9a, 9b), une au moins, étant réalisées de manière à déterminer l'orientation du support (6a, 6b) autour d'au moins un axe de coordonnées par rapport à au moins un autre support (6a, 6b) avec les caractéristiques de la revendication 1.

2. Le support (6a, 6b) selon la revendication 1, dans lequel le système de référence (8a, 8b), un au moins, est en outre réalisé de manière à déterminer la position spatiale du support (6a, 6b) par rapport à l'autre support (6a, 6b), un au moins.

3. Support (6a, 6b) selon la revendication 1 ou 2, ce support (6a, 6b) présentant au moins une cible de mesure (12a, 12b), qui a un rapport fixe avec le support (6a, 6b).

4. Support (6a, 6b) selon la revendication 3, ce support (6a, 6b) présentant au moins un système de mesure optique (19), réalisé de manière à déterminer l'orientation d'une roue (14) qui est disposée sur le support (6a, 6b) par rapport au support (6a, 6b), le système de mesure optique (19) comprenant en particulier au moins une caméra (18) dont le rapport au support (6a, 6b) est connu.

5. Support (6a, 6b) selon la revendication 3 ou 4, ce support (6a, 6b) présentant au moins un système de mesure optique (19), réalisé de manière à déterminer la position d'une roue (14) qui est disposée sur le support (6a, 6b), par rapport au support (6a, 6b), le système de mesure optique (19) comprenant en particulier au moins une caméra (18) dont le rapport au support (6a, 6b) est connu.

6. Poste de mesure (2) pour la mesure de véhicules comprenant au moins deux supports (6a, 6b) selon l'une quelconque des revendications 1 à 5.

7. Poste de mesure (2) pour la mesure de véhicules selon la revendication 6, dans lequel les systèmes de référence (8a, 8b) sont en outre réalisés de manière à déterminer la position des supports (6a, 6b) l'un par rapport à l'autre.

8. Poste de mesure (2) pour la mesure de véhicules selon la revendication 6 ou 7, le poste de mesure (2) présentant au moins un système de mesure optique (19), réalisé de manière à déterminer l'orientation d'une roue (14) qui est disposée sur le support (6a, 6b), par rapport au support (6a, 6b), le système de mesure optique (19) comprenant en particulier au moins une caméra (18).

9. Poste de mesure (2) pour la mesure de véhicules selon la revendication 8, le poste de mesure (2) présentant au moins un système de mesure optique (19), réalisé de manière à déterminer la position d'une roue (14) qui est disposée sur le support (6a, 6b), par rapport au support (6a, 6b), le système de mesure optique (19) comprenant en particulier au moins une caméra (18).

10. Poste de mesure (2) pour la mesure de véhicules selon la revendication 8 ou 9, dans lequel le système de mesure optique (19), un au moins, comprend au moins un capteur de mesure (16) pouvant être fixé à une roue (14).

11. Poste de mesure (2) pour la mesure de véhicules selon l'une quelconque des revendications 6 à 10, dans lequel les systèmes de référence (8a, 8b) des deux supports (6a, 6b) sont réalisés de manière à fournir au moins deux segments de référence (10, 11) entre les au moins deux supports (6a, 6b).

12. Procédé de mesure de la géométrie d'un véhicule sur un poste de mesure (2) selon l'une quelconque des revendications 6 à 11, le procédé consistant à:
déterminer l'orientation des au moins deux supports (6a, 6b) l'un par rapport à l'autre ; et
déterminer l'orientation d'une roue (14) disposée sur chacun des supports (6a, 6b) par rapport au support correspondant (6a, 6b).

13. Procédé de mesure de la géométrie d'un véhicule selon la revendication 12, le procédé consistant en outre à:
déterminer les positions des au moins deux supports (6a, 6b) l'un par rapport à l'autre ; et
déterminer la position des roues (14) disposées sur chacun des supports (6a, 6b) par rapport au support correspondant (6a, 6b).

14. Procédé d'amélioration d'un poste de mesure (2) pour la mesure de véhicules avec au moins deux supports (6a, 6b), qui sont chacun réalisés de manière à accueillir une roue de véhicule (14), le procédé consistant à monter, sur au moins deux des supports (6a, 6b), respectivement au moins un système de référence (8a, 8b), les systèmes de référence (8a, 8b) comprenant des caméras et des cibles de référence (9a, 9b) fixées sur les systèmes de référence (8a, 8b) et étant réalisés de manière à déterminer l'orientation des supports (6a, 6b) l'un par rapport à l'autre, les systèmes de référence (8a, 8b) étant en particulier réalisés de manière à déterminer les positions des supports (6a, 6b) l'un par rapport à l'autre.

15. Utilisation d'au moins deux systèmes de référence (8a, 8b), qui comprennent des caméras et des cibles de référence (9a, 9b) fixées sur les systèmes de référence (8a, 8b), pour la détermination de l'orientation relative d'au moins deux supports (6a, 6b) d'un poste de mesure (2) pour la mesure de véhicules, qui sont chacun réalisés de manière à accueillir une roue de véhicule 14), les supports étant chacun équipés d'un système de référence.
